# DEMANDE DE BREVET EUROPEEN

(11) **EP 0 769 834 A1**
(43) Date de publication de la demande: **23.04.1997**
(21) Numéro de dépôt: 96402212.3
(22) Date de dépôt: 16.10.1996
(51) Int. Cl.: H02G 7/00

(54) **Dispositif de pose de balises aériennes sur un câble**

(30) Priorité: 18.10.1995 FR 9512222
(71) Demandeur: ELECTRICITE DE FRANCE Service National, 75008 Paris (FR)
(72) Inventeur: Vallee, Patrick, 84160 Cadenet (FR)
(74) Mandataire: Dubois-Chabert, Guy

(57) **Abrégé**

Le dispositif comprend des magasins de distribution de demi-balises (12a, 12b) et des moyens (16) de mise en place et d'assemblage sur le câble de demi-balises (14) distribuées respectivement par les magasins, pour former des balises. Selon l'invention, le dispositif comporte des moyens d'accrochage (20, 22) pour être suspendu au câble (18) et pour se déplacer le long du câble selon un sens de déplacement (X), les moyens (16) de mise en place et d'assemblage étant disposés sur le dispositif de façon à poser les balises derrière les moyens d'accrochage par rapport au sens de déplacement.

## Description

### Domaine technique

La présente invention concerne un dispositif de pose automatique de balises aériennes sur un câble. De telles balises sont posées en particulier sur les câbles électriques et ont pour fonction de signaler la présence de ces câbles aux pilotes d'aéronefs, notamment à proximité des terrains d'aviation.

### Etat de la technique antérieure

Les balises de câble aériens se présentent généralement sous la forme de deux demi-balises hémisphériques encore appelées coquilles qui sont fixées par vis l'une à l'autre sur le câble. On peut se reporter à ce sujet au document FR-A-2 569 312. Ces demi-balises peuvent être assemblées manuellement et posées sur un câble. Il existe également un type de balises à fermeture par clips. A titre d'exemple, le document EP-A-0 468 368 montre un dispositif de pose automatique de ces balises à clips. Ce dispositif est positionné sur un câble en restant suspendu à un hélicoptère. Il comporte une paire de magasins contenant chacun des demi-balises hémisphériques. Un mécanisme de pose est prévu pour extraire respectivement de chaque magasin une demi-balise et pour fixer mutuellement ces demi-balises l'une à l'autre sur le câble.

Ce type de dispositif, connu, facilite la tâche de mise en place des balises sur un câble. Toutefois, la manipulation du dispositif est complexe et l'opération de pose reste fastidieuse.

En effet, après la pose d'une balise, le dispositif doit être retiré de son emplacement sur le câble pour être positionné en un emplacement suivant pour la pose de la prochaine balise.

Le retrait et le positionnement successifs du dispositif sur le câble est une opération longue et délicate en raison du fait notamment que le dispositif est suspendu à un hélicoptère. L'usage en continu de l'hélicoptère conduit également à un coût élevé de l'opération de pose des balises.

Des guides de positionnement latéral peuvent être prévus pour faciliter la mise en place du dispositif au-dessus du câble. Toutefois, le guidage du dispositif le long du câble reste relativement imprécis ; ce qui complique la disposition équidistante des balises sur le câble.

La présente invention a pour but de proposer un nouveau type de dispositif de pose de balises qui permette de s'affranchir des difficultés évoquées ci-dessus.

Un autre but est de proposer un dispositif autonome qui ne nécessite pas une intervention continuelle d'un hélicoptère pour la mise en place des balises successives.

Un autre but de l'invention est de proposer un dispositif permettant la pose des balises, réparties sur le câble de façon équidistante.

Un autre but encore est de proposer un dispositif de pose de balises sur un câble particulièrement sûr et facile à mettre en place sur le câble.

L'invention a également pour but de proposer un procédé de mise en place de balises sur un câble.

### Exposé de l'invention

Pour atteindre les buts mentionnés ci-dessus, l'invention a plus précisément pour objet un dispositif de pose automatique de balises aériennes sur un câble, comprenant au moins une paire de magasins de distribution de demi-balises, des moyens de mise en place et d'assemblage sur le câble de demi-balises distribuées respectivement par les magasins de distribution, pour former des balises, caractérisé en ce que le dispositif comporte des moyens d'accrochage et de déplacement pour être suspendu au câble et pour se déplacer le long du câble selon un sens de déplacement, les moyens de mise en place et d'assemblage des demi-balises étant disposés sur le dispositif de façon à poser les balises derrière les moyens d'accrochage du dispositif sur le câble, par rapport au sens de déplacement.

Grâce aux moyens d'accrochage et de déplacement, le positionnement du dispositif par rapport au câble pour la mise en place des balises, est automatiquement assuré lorsque le dispositif est suspendu au câble.

Par ailleurs, lorsque le dispositif est suspendu au câble, il suffit de le déplacer le long du câble d'une distance constante entre la pose de deux balises successives pour obtenir une répartition équidistante de ces dernières sur le câble. On peut noter à ce sujet qu'un déplacement le long du câble peut être effectué avec une précision bien supérieure à celle du positionnement sur un câble d'un dispositif suspendu à un hélicoptère.

De plus, selon un aspect avantageux de l'invention le dispositif peut être équipé de moyens moteurs pour son déplacement autonome le long du câble.

Comme le dispositif est suspendu au câble il est automatiquement positionné par rapport au câble. Toutefois, le dispositif peut encore être perfectionné pour tenir compte de l'angle existant entre un axe de déplacement du dispositif et le câble à l'arrière du dispositif, dans la région où sont posées les balises. Cet angle peut en effet varier légèrement en fonction de paramètres tels que la tension du câble, le poids du dispositif et la position du dispositif sur le câble. Ainsi, selon un autre aspect de l'invention, les moyens de mise en place et d'assemblage des demi-balises comportent un guide de positionnement des demi-balises par rapport au câble avant leur assemblage.

Selon une réalisation particulière du dispositif, les moyens de mise en place et d'assemblage des demi-balises comportent :
- au moins un mécanisme de pose comprenant le guide de positionnement et une paire de têtes de préhension de demi-balises distribuées par les magasins,
- au moins un mécanisme de déplacement pour déplacer le mécanisme de pose entre les magasins et le câble, le mécanisme de pose étant monté pivotant sur le mécanisme de déplacement pour orienter le guide de positionnement vers le câble, et le mécanisme de pose comportant en outre des moyens d'articulation mutuelle des têtes de préhension pour les faire pivoter d'une position, dite ouverte, de préhension des demi-balises, vers une position, dite fermée, d'assemblage des demi-balises sur le câble, dans laquelle des côtés d'assemblage respectivement de chaque demi-balise sont mutuellement en contact.

Comme décrit plus en détail dans la suite du texte, le mécanisme de pivotement peut en outre coopérer avec le guide de positionnement pour faire pivoter le mécanisme de pose et ajuster précisément sa position par rapport au câble, en tenant compte notamment de l'angle que fait le câble par rapport à l'axe de déplacement.

A cet effet, le guide de positionnement peut comporter une paire de fourches dans un plan sensiblement perpendiculaire à un axe de rotation du mécanisme de pose par rapport au mécanisme de déplacement et contenant un axe défini par les moyens d'articulation.

Les fourches sont, par exemple, disposées sur des bras de fourche respectivement de part et d'autre des têtes de préhension.

Selon une réalisation particulière du dispositif de l'invention, celui-ci comprend un châssis incluant les moyens d'accrochage. Les moyens d'accrochage peuvent présenter au moins deux crochets de suspension du dispositif fixés respectivement à l'avant et à l'arrière du châssis, les crochets définissant l'axe de déplacement du dispositif sur le câble et les magasins de distribution étant disposés côte à côte dans le châssis, sensiblement parallèlement à l'axe de déplacement, les magasins présentant chacun une ouverture de distribution de demi-balises, orientée vers l'arrière du dispositif, par rapport au sens de déplacement.

Dans un tel dispositif, le mécanisme de déplacement peut comporter au moins un bras pivotant présentant une première extrémité avec une première articulation reliée au châssis, la première articulation ayant un axe de pivotement sensiblement perpendiculaire à un plan médian des magasins de distribution de demi-balises, et contenant l'axe de déplacement, le mécanisme de déplacement comportant en outre un vérin monté entre le châssis et le bras pivotant pour faire pivoter le bras autour du premier axe entre une position basse dans laquelle le mécanisme de pose est positionné derrière les ouvertures de distribution des magasins et une position haute dans laquelle le mécanisme de pose est positionné derrière les crochets de suspension.

De plus, le bras de déplacement peut présenter une deuxième extrémité avec une deuxième articulation selon un axe de pivotement sensiblement parallèle à l'axe de pivotement de la première articulation, la deuxième articulation portant le mécanisme de pose, le dispositif comportant un moyen d'actionnement pour faire pivoter le mécanisme de pose autour de l'axe de pivotement de la deuxième articulation entre une première position dans laquelle les têtes de préhension sont en position ouverte et tournées en regard des ouvertures de distribution des magasins, lorsque le bras de déplacement est en position basse, et une deuxième position dans laquelle les têtes de préhension sont tournées en regard du câble, lorsque le bras de déplacement est en position haute.

Pour assembler les demi-balises au moins l'une des têtes de préhension peut comporter des moyens de manoeuvre d'organes de fixation, tels que des ensembles vis-écrou, portés par les demi-balises.

Pour commander le fonctionnement du dispositif, celui-ci peut comporter par exemple une unité centrale de commande.

Cette unité est apte à commander à partir d'une position de repos dans laquelle le bras est en position basse et le mécanisme de pose dans la première position, successivement :
- l'actionnement d'un système de préhension de chaque tête de préhension pour saisir une demi-balise dans chaque magasin,
- l'actionnement du vérin du bras pivotant et des moyens d'actionnement pour faire pivoter le bras vers la position haute et faire pivoter le mécanisme de pose vers la deuxième position,
- l'actionnement du mécanisme de pose pour faire pivoter les têtes de préhension de la position ouverte vers la position fermée,
- l'actionnement des moyens de manoeuvre d'organes de fixation des balises,
- l'actionnement du système de préhension de chaque tête de préhension pour libérer les demi-balises,
- l'actionnement du mécanisme de pose pour faire pivoter les têtes de préhension de la position fermée vers la position ouverte,
- l'actionnement du vérin du bras pivotant et des moyens d'actionnement pour respectivement faire pivoter le bras vers la position basse et faire pivoter le mécanisme de pose vers la première position.

L'unité centrale de commande peut être programmée pour la pose d'un nombre prédéterminé de balises.

L'invention concerne également un procédé de pose de balises aériennes avec un dispositif tel que décrit ci-dessus.

Conformément à l'invention, le procédé comporte les étapes suivantes :
- préhension par les têtes de préhension de deux demi-balises délivrées par les magasins de distribution,
- actionnement du mécanisme de déplacement pour déplacer le mécanisme de pose des magasins vers le câble,
- actionnement du mécanisme de pose pour orienter le guide de positionnement vers le câble,
- actionnement du mécanisme de pose pour faire pivoter les têtes de préhension vers la position fermée lorsque le guide de positionnement est en contact avec le câble,
- actionnement des moyens de manoeuvre des organes de fixation portés par les demi-balises pour rendre mutuellement solidaires les demi-balises et pour les fixer sur le câble.

Selon une mise en oeuvre perfectionnée du procédé, l'actionnement du bras de pivotement et l'actionnement du mécanisme de pose pour orienter le guide de positionnement peuvent être en partie concomitants.

Selon un autre perfectionnement, l'actionnement du mécanisme de pose pour l'orientation du guide est interrompu et le mécanisme de pose pivote librement lorsqu'au moins l'une des fourches du guide positionnement est en appui contre le câble et en ce que l'actionnement du mécanisme de pivotement est interrompu lorsque les deux fourches de la paire de fourches sont en appui contre le câble.

D'autres caractéristiques et avantages de la présente invention ressortiront mieux de la description qui va suivre, en référence aux figures des dessins annexés, donnée à titre purement illustratif et non limitatif.

### Brève description des figures.

- la figure 1 est une vue latérale simplifiée d'un dispositif de pose de balises aériennes conforme à la présente invention,
- la figure 2 est une vue arrière simplifiée du dispositif de la figure 1,
- les figures 3A, 3B, 3C sont des vues schématiques simplifiées à plus petite échelle du dispositif de l'invention, illustrant la pose d'une balise sur le câble,
- la figure 3D est une vue schématique simplifiée d'un mécanisme de pose de balises du dispositif des figures 3A, 3B et 3C,
- la figure 4 est une vue à plus grande échelle d'un bras pivotant pour déplacer le mécanisme de pose du dispositif de l'invention,
- la figure 5 est une vue plus détaillée et à plus grande échelle du mécanisme de pose,
- la figure 6 est une vue détaillée d'une tête de préhension de demi-balises, conforme à l'invention.

### Description détaillée de modes de réalisation de l'invention

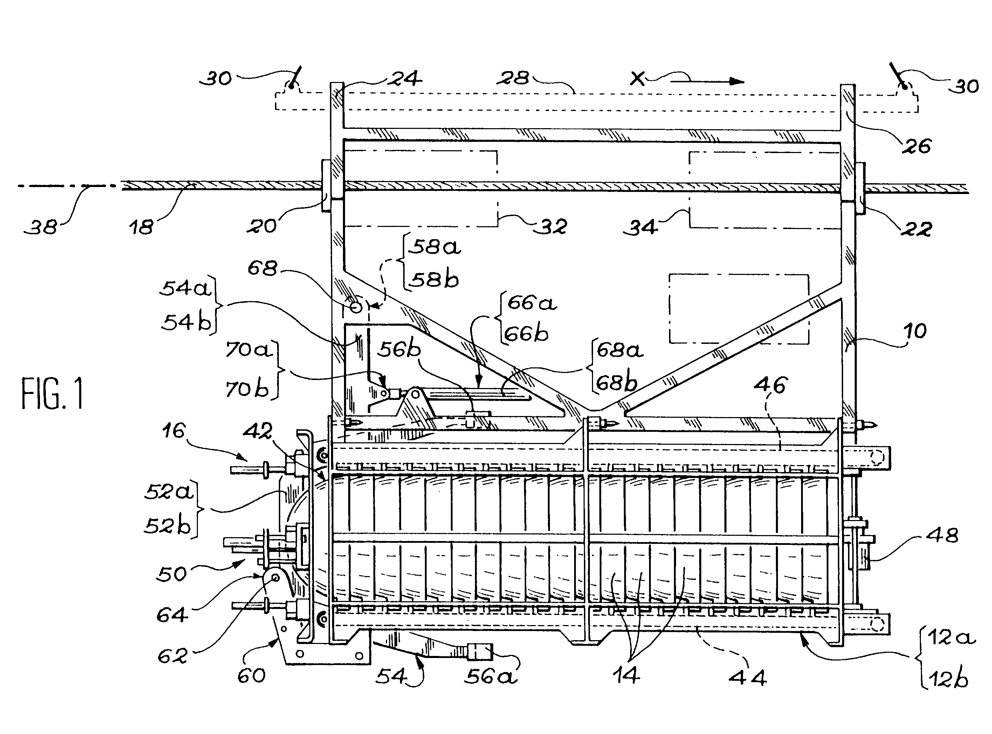

Comme le montre la figure 1, le dispositif de l'invention comporte, dans le mode de réalisation illustré, un châssis 10, une paire de magasins 12a, 12b de distribution de demi-balises 14 montés de façon amovible dans le châssis 10 et des moyens 16 de mise en place et d'assemblage de demi-balises sur un câble 18.

Le dispositif comporte également dans sa partie supérieure des moyens d'accrochage et de déplacement pour être suspendu au câble 18. Il s'agit par exemple de deux crochets 20, 22 fixés respectivement à l'avant et à l'arrière du châssis 10 et de moyens moteurs de déplacement à galets 32, 34. Les moyens d'accrochage 20, 22, 32, 34 ont non seulement pour fonction la suspension du dispositif au câble 18, mais aussi de permettre son déplacement le long du câble dans un sens X indiqué par une flèche.

Les termes avant et arrière du dispositif doivent être compris par rapport au sens X de déplacement du dispositif sur le câble. Ainsi, l'avant et l'arrière du dispositif correspondent respectivement à la partie de droite et la partie de gauche de la figure.

Le dispositif comporte en outre des crochets 24, 26, fixés également à l'avant et à l'arrière du châssis 10 pour permettre son soulèvement du sol et pour le transporter jusqu'au câble 18, afin de l'y suspendre.

Le dispositif peut être soulevé par l'intermédiaire d'une barre 28, suspendue à un hélicoptère, non représenté, par des câbles 30, et qui vient en prise dans les crochets 24, 26.

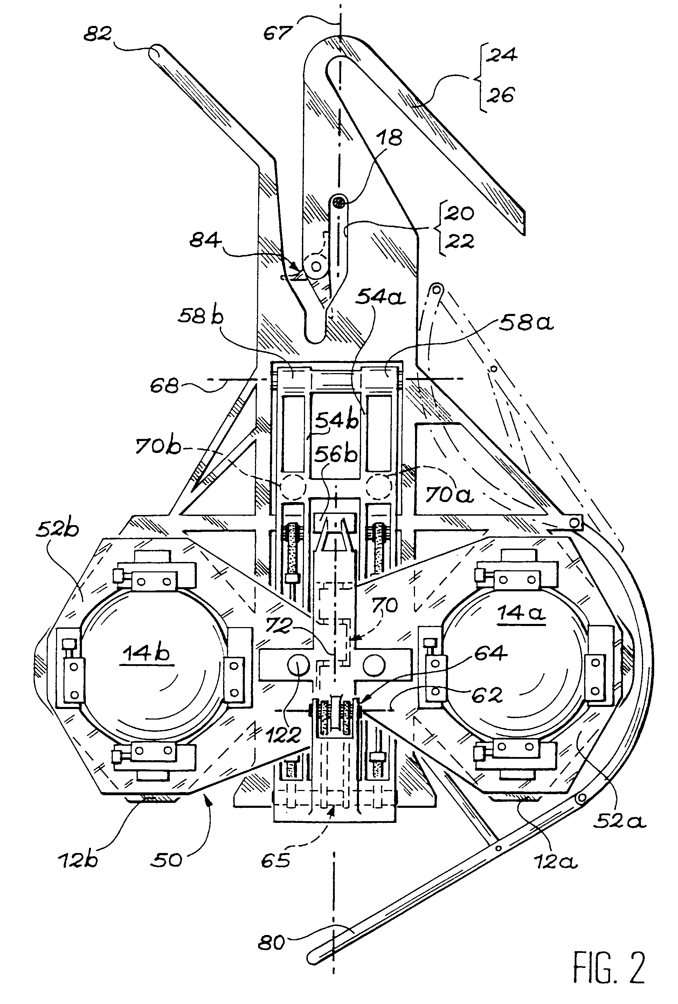

Les crochets 20, 22 pour la suspension du dispositif sur le câble et les crochets 24, 26 pour soulever le dispositif du sol et venir l'accrocher au câble, sont également visibles à la figure 2 décrite plus en détail dans la suite du texte.

Les moyens moteurs 32, 34 équipés par exemple de galets d'entraînement, non représentés, en prise sur le câble 18, sont prévus dans la partie supérieure du dispositif pour permettre son déplacement autonome sur le câble 18.

Ainsi, la barre 28, représentée en traits discontinus sur la figure 1, peut être retirée du dispositif dès que celui-ci est suspendu au câble. Le déplacement d'une position de pose d'une balise à la suivante peut alors être piloté à distance, par exemple, en actionnant les moyens moteurs 32, 34.

Les magasins 12a, 12b disposés côte à côte dans le châssis, dans une position inférieure aux crochets 20, 22, 24, 26 sont orientés sensiblement parallèlement à un axe 38, dit axe de déplacement, passant par les crochets 20, 22 de suspension du dispositif sur le câble 18. Dans le cas de la figure 2, l'axe de déplacement 38 est confondu avec la portion de câble 18 représentée.

Chaque magasin 12a, 12b comporte une pluralité de demi-balises 14, sous la forme de coquilles empilées. Les coquilles peuvent être par exemple en matière plastique.

Les coquilles sont mises en place dans les magasins en orientant leur partie hémisphérique vers la sortie des magasins, c'est-à-dire vers une ouverture 42 de distribution des coquilles. Lorsque les magasins, chargés, sont mis en place dans le châssis, leurs ouvertures 42 sont tournées vers l'arrière, c'est-à-dire vers les moyens 16 de mise en place des balises.

Des courroies d'entraînement 44, 46 mues par un moteur 48 sont prévues de part et d'autre de chaque magasin pour entraîner les demi-balises vers l'ouverture 42 où elles sont délivrées une à une aux moyens 16 de mise en place et d'assemblage des demi-balises sur le câble.

Dans le cas de la présente réalisation, le dispositif ne comporte qu'une seule paire de magasins de distribution de demi-balises interchangeables. Toutefois, il est possible d'envisager un dispositif qui comporte une pluralité de tels magasins.

Les moyens 16 de mise en place et d'assemblage des demi-balises sur le câble comportent un mécanisme de pose 50 représenté dans une position derrière les magasins, pour la préhension simultanée de deux demi-balises, respectivement dans chaque magasin 12a, 12b. Le mécanisme de pose comporte à cet effet deux têtes 52a, 52b de préhension de demi-balises non représentées en détail sur cette figure.

Le mécanisme de pose 50 est relié au châssis 10 du dispositif par un mécanisme de déplacement comportant une paire de bras pivotants 54a, 54b. Chaque bras de la paire ayant une première extrémité fixée au châssis 10 par l'intermédiaire respectivement d'une articulation 58a, 58b. Une deuxième extrémité 60 commune aux deux bras 54a, 54b est en forme de crosse.

Le mécanisme de pose est monté pivotant autour d'un axe de pivotement 62 d'une articulation 64 qui le relie à la crosse 60.

Un guide de positionnement du mécanisme de pose par rapport au câble présente deux fourches 56a, 56b disposées dans un plan médian du mécanisme de pose, sensiblement perpendiculaire à l'axe de pivotement 62. Les fourches 56a, 56b sont fixées au mécanisme de pose de part et d'autre des têtes de préhension 52a, 52b par des bras de fourche.

Par ailleurs, des vérins 66a, 66b sont prévus pour faire pivoter la paire de bras 54a, 54b autour d'un axe 68 des articulations 58a, 58b.

Les vérins 66a, 66b présentent respectivement un corps de vérin 68a, 68b monté pivotant sur le châssis 10 et une tige de vérin montée sur une chape 70a, 70b de chaque bras 54a, 54b.

La référence 61 de la figure 1 désigne une unité centrale de commande destinée à coordonner les mouvements des organes des moyens de mise en place et d'assemblage des balises. L'unité 61 comporte par exemple un logiciel pour le déroulement des mouvements mais peut également être équipée de moyens de télécommande pour le pilotage à distance de certaines opérations, par un opérateur. L'unité 61 permet en particulier de commander le fonctionnement des vérins 66a, 66b prévus pour faire pivoter les bras 54a, 54b et, par exemple, le fonctionnement des moyens moteurs 32, 34 pour le déplacement autonome du dispositif sur le câble.

L'unité 61 peut en particulier être programmée pour commander un déplacement prédéterminé du dispositif le long du câble après la pose de chaque balise afin d'obtenir une répartition sensiblement équidistante des balises sur le câble. L'unité 61 peut aussi être programmée pour la pose d'un nombre prédéterminé de balises après la suspension du dispositif au câble.

La figure 2 est une vue arrière du dispositif de la figure 1. Sur cette figure apparaissent plus clairement les deux bras 54a, 54b de la paire de bras, leurs premières extrémités 56a, 56b, les articulations 58a, 58b autour de l'axe d'articulation 68, la crosse 60 formant une deuxième extrémité commune pour les bras 54a, 54b et l'articulation 64 autour de l'axe de pivotement 62.

La référence 65 désigne de façon générale des moyens d'actionnement disposés sur les bras 54a, 54b pour faire pivoter le mécanisme de pose 50 autour de l'axe de pivotement 62. Les moyens 65 sont expliqués plus en détail dans la suite de la description.

La figure 2 montre également les deux têtes de préhension 52a, 52b de demi-balises disposées respectivement devant les ouvertures de distribution des magasins 12a, 12b et saisissent respectivement des demi-balises 14a, 14b.

On constate que les têtes de préhension et les magasins sont disposés symétriquement par rapport à un plan médian 67 contenant l'axe de déplacement par lequel passe donc le câble de suspension 18.

Les axes 62 et 68 sont sensiblement perpendiculaires à ce plan 67.

Le mécanisme de pose comporte également, comme le montre la figure 2, une articulation 70 avec un axe 72 situé dans le plan 67, autour de laquelle peuvent mutuellement pivoter les têtes de préhension 52a et 52b.

Les têtes peuvent en particulier pivoter d'une position, dite ouverte, telle que représentée à la figure 2 et dans laquelle les côtés d'assemblage des demi-balises, maintenues par les têtes, se situent sensiblement dans un même plan, vers une position fermée décrite plus loin.

Des guides 80, disposés à l'avant et à l'arrière du châssis, entourent latéralement l'un des côtés du dispositif pour guider la barre de soulèvement (non représentée à la figure 2), suspendue à un hélicoptère, vers les crochets 24, 26 pour la mise en place du dispositif sur le câble 18. Les guides 80 permettent par ailleurs d'éviter tout choc entre une barre de soulèvement et des organes du dispositif.

Les guides 80 peuvent être amenés d'une position déployée indiquée en trait plein sur la figure vers une position indiquée en trait mixte.

Par ailleurs, des guides 82 dans la partie sommitale du châssis permettent de guider le câble 18 vers les crochets 20, 22 afin d'y accrocher le dispositif de pose de balises.

Un système de verrou de sécurité 84 est prévu dans la partie inférieure des crochets 20, 22 pour éviter tout risque de décrochage accidentel du dispositif.

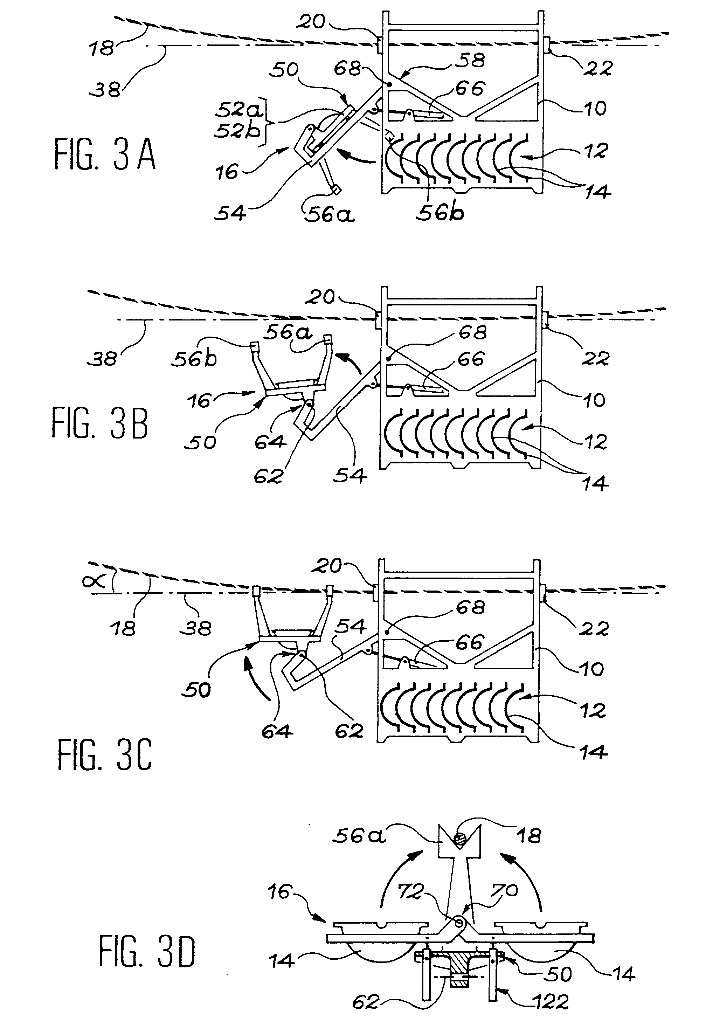

Les figures 3A à 3D illustrent de façon schématique la pose d'une balise sur un câble 18.

Sur ces figures, sont représentés de façon simplifiée, le châssis 10, un magasin 12a de distribution de demi-balises 14, les crochets de suspension 20, 22 et les éléments essentiels des moyens 16 de mise en place et d'assemblage des demi-balises.

En particulier, les figures montrent le mécanisme de pose 50 avec les têtes de préhension 52a, 52b des demi-balises, les fourches 56a, 56b du guide de positionnement, et le mécanisme de déplacement.

Dans la suite de la description, il est fait référence à un seul bras pivotant 54 du mécanisme de déplacement, toutefois dans sa réalisation pratique le dispositif peut comporter, un seul, une paire ou une pluralité de bras de pivotement, ces bras décrivant tous le même mouvement.

La pose d'une balise sur le câble débute par la préhension de demi-balises 14 à la sortie des magasins. Lors de cette opération le bras de déplacement 54 est dans la position basse déjà décrite et représentée à la figure 2. Dans cette position, le mécanisme de pose est positionné devant les ouvertures de distribution des magasins et orienté de sorte que les têtes de préhension soient tournées en regard des ouvertures de distribution pour saisir les demi-balises. Un axe fictif passant par les fourches du guide de positionnement est alors sensiblement perpendiculaire à l'axe de câble 38. Cette position du bras et du mécanisme de pose est encore désignée par position de repos des moyens de mise en place des demi-balises.

Lorsque chaque tête de préhension est équipée d'une demi-balise le vérin 66 est actionné pour provoquer un pivotement vers l'arrière du bras 54, autour de l'axe 68 de l'articulation 58 comme le montre la figure 3A.

De manière simultanée ou non, des moyens d'actionnement non représentés sur les figures 3A à 3D, sont mis en service pour faire pivoter également vers l'arrière le mécanisme de pose 50, autour de l'axe 62 de l'articulation 64.

Comme le montre la figure 3B, le pivotement du mécanisme de pose 50 autour de l'axe 62 permet d'orienter le guide de positionnement 56a, 56b vers le câble et donc de tourner les têtes de préhension en regard du câble. Lorsque les têtes de préhension sont en regard du câble les côtés d'assemblages des demi-balises sont également tournés, en regard du câble. Le plan fictif contenant les côtés d'assemblage des demi-balises, sensiblement perpendiculaire au plan 67 visible à la figure 2, est alors sensiblement parallèle à l'axe de déplacement 38.

La figure 3C permet de mettre en évidence le rôle du guide de positionnement. Comme le montrent les figures, le câble de suspension 18 n'est pas parfaitement parallèle à l'axe de déplacement 38. En effet, sous l'effet de la flèche d'un câble entre les pylônes de support, accentué par le poids suspendu du dispositif, le câble 18 forme à l'arrière et à l'avant du dispositif un léger angle α (figure 3C) avec l'axe 38. Cet angle est volontairement exagéré pour des raisons de clarté des figures.

En raison de l'angle α qui peut varier en fonction de la position du dispositif le long du câble, il n'est pas possible de programmer exactement l'amplitude de pivotement du bras 54 autour de l'axe 68 et l'amplitude de pivotement du mécanisme de pose 50 autour de l'axe 62 pour positionner exactement le mécanisme de pose par rapport au câble.

Ainsi, de façon avantageuse, le fonctionnement des moyens d'actionnement pour le pivotement du mécanisme de pose est interrompu lorsque, comme le montre la figure 3C, l'une des fourches du guide de positionnement 56a est en appui contre le câble 18. A ce moment, l'articulation 64 autour de l'axe 62 est rendue libre pour autoriser le libre pivotement du mécanisme de pose autour de cet axe.

En continuant à pivoter le bras 54 autour de l'axe 68, la deuxième fourche 56b vient également se positionner contre le câble 18. Lorsque cette position est atteinte, le bras 54 est dans sa position dite position haute et l'actionnement du vérin 66 est également interrompu.

Dans la position haute, comme le montre la figure 3D, le mécanisme de pose 50 est positionné devant le câble 18 ; il est maintenu à une distance fixe déterminée par la longueur des bras de fourche du guide de positionnement.

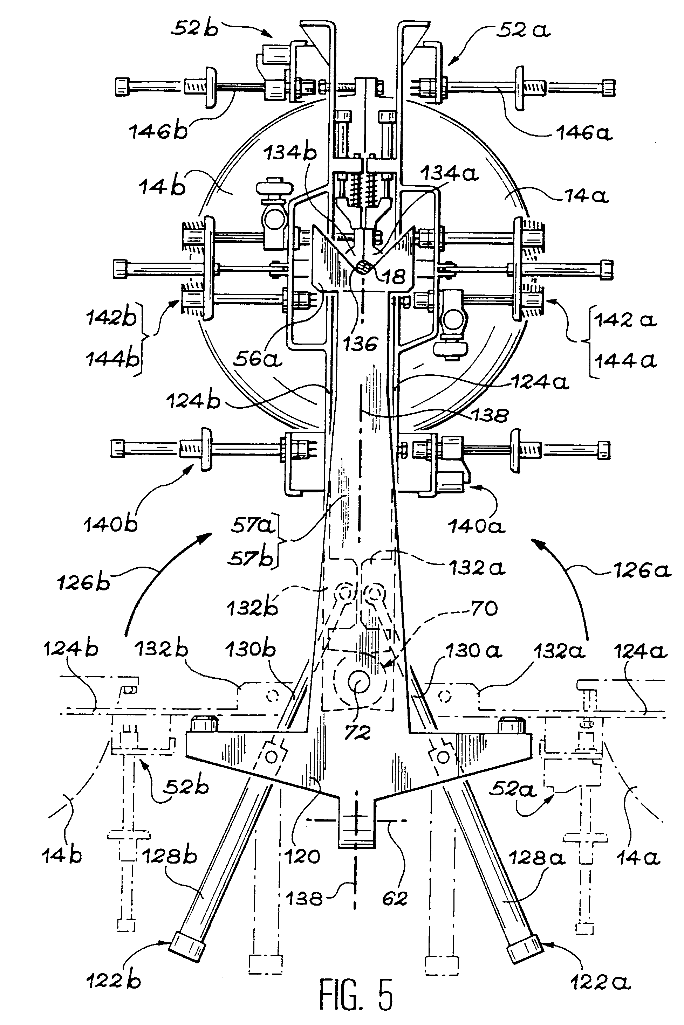

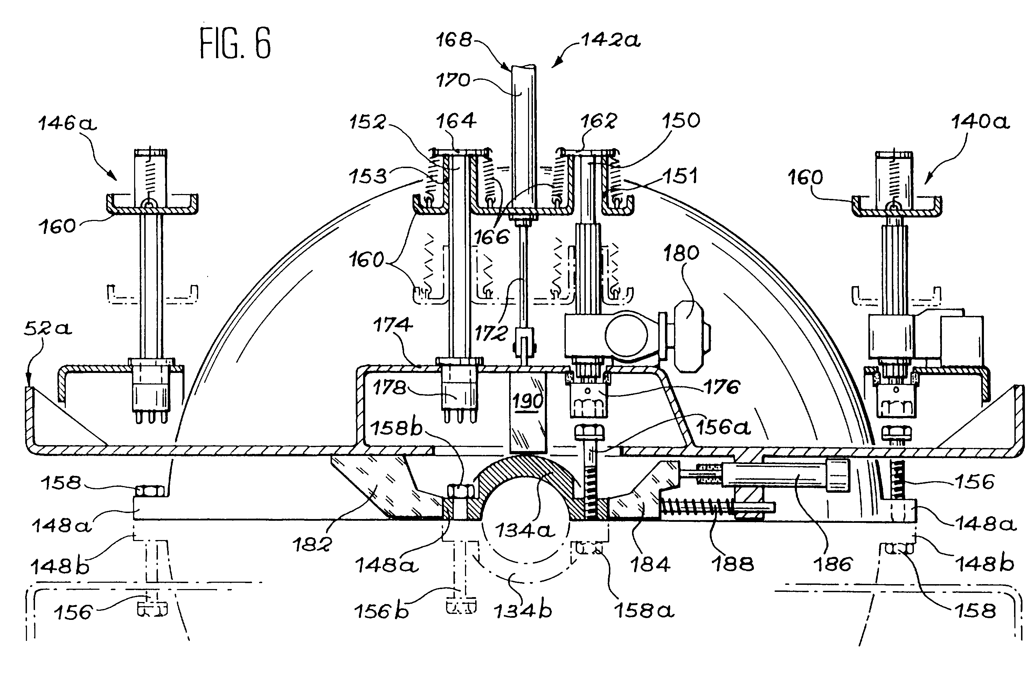

Les têtes de préhension équipées de demi-balises sont alors parfaitement en regard du câble 18 et peuvent être pivotées autour de l'axe 72 de l'articulation 70 comme le montrent les flèches de la figure 3D. Le pivotement des têtes de préhension et l'assemblage mutuel des balises est décrit dans la suite de la description en relation avec les figures 5 et 6.

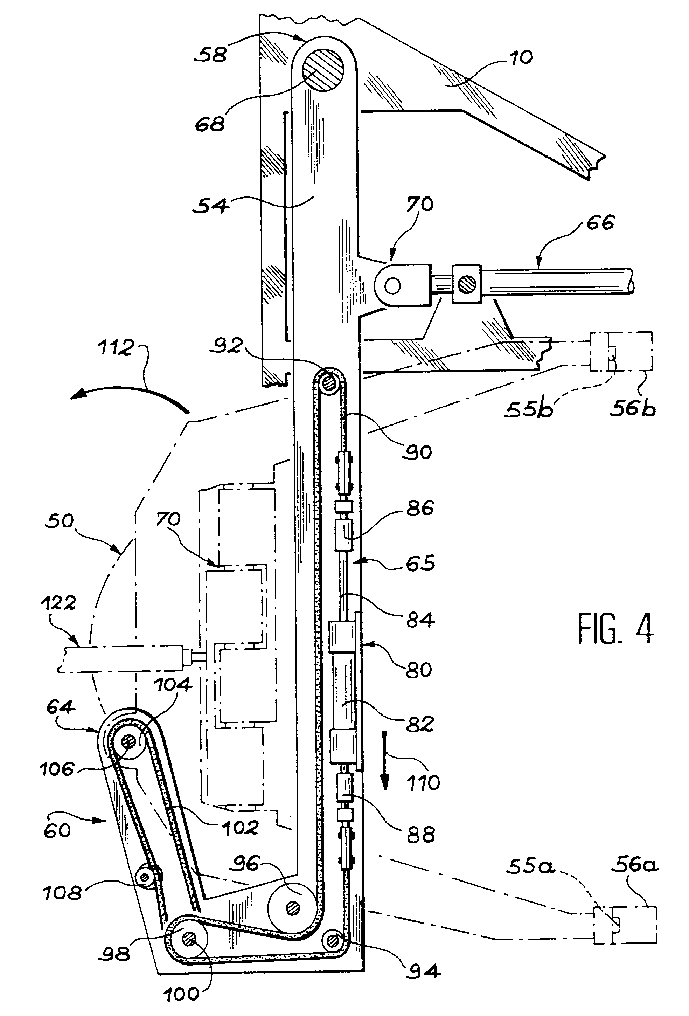

La figure 4 permet de mieux comprendre l'agencement des moyens moteurs 65 pour le pivotement du mécanisme de pose autour de l'axe 62.

La figure 4 représente en particulier le bras de déplacement 54. La description qui suit est faite par référence au bras unique 54 visible sur la figure, toutefois le dispositif peut, comme le montre en particulier la figure 2, être équipé de deux ou d'une pluralité de tels bras.

Le bras comporte une première extrémité avec une première articulation 58 reliée au châssis 10 et une deuxième extrémité en forme de crosse, avec une deuxième articulation 64 qui reçoit le mécanisme de pose 50 représenté en trait mixte.

Comme le montre la figure, les moyens d'actionnement 65 comportent, pour chaque bras, un vérin 80, avec un corps de vérin 82, fixé au bras 54 et une tige de vérin 84 dont les extrémités 86, 88 sont respectivement reliés à une courroie 90. La courroie passant sur des galets de renvoi 92, 94, 96 permet d'entraîner en rotation un galet 98 monté sur un arbre 100, lorsque la tige du vérin est déplacée selon son axe.

Une deuxième courroie 102, passant sur un galet non visible solidaire en rotation de l'arbre 100 permet de transférer le mouvement de rotation de l'arbre 100 à un galet 104 fixé sur un arbre 106 d'entraînement du mécanisme de pose. La courroie 102 est tendue par un galet tendeur 108.

Ainsi, en actionnant le vérin 80, un mouvement de la tige de vérin 84 dans le sens de la flèche 110 entraîne en rotation l'arbre 100, et partant l'arbre 106, et provoque le pivotement du mécanisme de pose 50 sur l'articulation 64 dans le sens de la flèche 112.

Un système de débrayage, non visible sur la figure, piloté par l'unité centrale de commande permet de mettre en communication les chambres du vérin pour rendre libre le pivotement du mécanisme 50 sur l'articulation 64, lorsqu'au moins l'une des fourches 56a, 56b est en appui contre le câble. A cet effet, un détecteur de contact mécanique 55a, 55b relié à l'unité centrale de commande 61 peut être prévu respectivement dans chaque fourche 56a, 56b.

La figure 5 montre plus en détail la construction du mécanisme de pose et illustre l'assemblage des demi-balises sur le câble.

Le mécanisme de pose comporte un bâti 120 monté pivotant sur le bras de déplacement (non représenté) autour de l'axe 62. Le bâti supporte l'articulation 70 autour de laquelle peuvent pivoter les têtes de préhension, entre une position, dite ouverte, telle que représentée à la figure 3D et telle qu'esquissée en trait mixte sur la figure 5, et une position dite fermée, représentée en trait plein. Dans la position ouverte, les côtés d'assemblage des demi-balises sont situés dans un plan sensiblement perpendiculaire à des bras de fourche 57a, 57b supportant les fourches du guide de positionnement. Dans la position fermée les côtés d'assemblage des demi-balises 14a, 14b sont mutuellement en contact dans un plan 138 sensiblement parallèle aux bras de fourche, contenant l'axe 72 et passant par le câble 18. Le plan 138, qui est le plan médian du mécanisme de pose est, par ailleurs, sensiblement perpendiculaire à l'axe de pivotement 62.

Des vérins 122a, 122b prenant appui sur le bâti 120 et pilotés par l'unité centrale de commande (visible à la figure 1) permettent d'actionner des bras 124a, 124b des tête de préhension 52a, 52b pour les faire pivoter selon les flèches 126a, 126b entre la position ouverte et la position fermée. Les vérins 122a, 122b présentent à cet effet respectivement un corps de vérin 128a, 128b monté sur le bâti 120 avec possibilité de pivotement, et une tige de vérin 130a, 130b montée respectivement sur une chape 132a, 132b de chaque bras.

Le bâti 120 porte également le guide de positionnement dont on peut voir sur la figure une fourche 56a, supportée par un bras de fourche 57a.

La longueur des bras de fourche, est ajustée par rapport à la longueur des bras 124a, 124b des têtes de préhension de telle manière qu'un passage de câble 134a, 134b des balises 14a, 14b maintenues respectivement par les têtes 52a, 52b intercepte exactement le câble 18 en appui contre le sommet 136 de chaque fourche, lorsque les têtes de préhension sont pivotées de la position ouverte à la position fermée.

Chaque tête de préhension est équipée de moyens de manoeuvre d'organes de fixation portés par les demi-balises. Il s'agit, par exemple, de quatre ensembles de vissage 140a, 140b, 142a, 142b, 144a, 144b, 146a, 146b, coopérant avec des ensembles vis-écrou situés sur les balises.

Les ensembles de vissage permettent de rendre solidaires les deux demi-balises pour former une balise et de rendre la balise solidaire du câble.

Chaque ensemble de vissage comporte une tige de vissage 150 pour entraîner en rotation une vis et une tige de maintien 152 d'un écrou. Les tiges de vissage 150 et de maintien 152 sont disposées de telle façon que, dans la position fermée, une tige de vissage 150 de l'une des têtes de préhension 52a soit respectivement en face d'une tige de maintien 152 de la deuxième tête de préhension 52b.

Les vis et les écrous pour la fixation sont logés respectivement dans des brides 148a, 148b des demi-balises. Chaque demi-balise comporte deux premières brides de fixation sur le câble, diamétralement opposées et, dans le cas de l'exemple décrit, deux brides supplémentaires, disposées également de façon diamétralement opposée, et à 90° des premières brides dans le plan d'assemblage. Les brides correspondent respectivement aux ensembles de vissage, et chaque bride de chaque demi-balise comporte respectivement une vis et un écrou correspondant respectivement à la tige de vissage et la tige de maintien de chaque ensemble de vissage.

La figure 6 montre plus en détail une tête de préhension et permet de mieux comprendre l'assemblage des demi-balises, et le fonctionnement des têtes de préhension.

La demi-balise 14a, représentée à la figure 6 comporte quatre brides d'assemblage 148a deux à deux diamétralement opposées. Deux des brides d'assemblage comportent en outre un passage de câble 134a. Des brides d'assemblage correspondantes 148b et un passage de câble correspondant 134b sont prévus sur la demi-balise 14b associée à la demi-balise 14a.

Pour des raisons de facilité d'assemblage, les vis et les écrous sont déjà présents sur les balises dans les magasins de distribution ; ils y sont maintenus par exemple au moyen d'une pâte adhésive.

Sur la figure 6, les références 156a, 156b, 158a, 158b désignent respectivement les vis et les écrous de chaque demi-balise, respectivement de part et d'autre du passage de câble 134a, 134b. Les références 156 et 158 désignent les vis et les écrous de chaque balise sur une bride d'assemblage latérale 148a, 148b.

Le fonctionnement des ensembles de vissage est expliqué en référence à l'ensemble de vissage 142a du centre de la figure, toutefois, le fonctionnement des autres ensembles de vissage est identique.

L'ensemble de vissage comporte une coupelle mobile 160 qui reçoit les tiges de vissage 150 et de maintien 152. La coupelle comporte deux cheminées de coulissement 151, 153 des tiges 150 et 152, et des plaques 162, 164, solidaires respectivement des tiges 150, 152 sont reliées à la coupelle au moyen de ressorts 166.

Dans un état de repos de l'ensemble de vissage la coupelle est dans une position haute, telle que représentée en trait plein sur la figure 6, les plaques 162, 164 sont en appui sur la partie sommitale des cheminées 151, 153.

Un vérin 168 dont le corps de vérin 170 est fixé à la coupelle 160 et dont la tige de vérin 172 est fixée à un cadre 174 de la tête de préhension 52a, permet d'abaisser la coupelle de sa position de repos vers une position de vissage. La position de vissage est représentée en traits mixtes sur la figure 6.

Dans la position de vissage les têtes de vissage 176 et de maintien 178 des tiges 150 et 152 viennent respectivement en prise avec la vis 156a et l'écrou 158b. Les plaques 162, 164 sont alors séparées des cheminées 151, 153 et les ressorts 166 appliquent sur les tiges 150, 152 des forces destinées à maintenir fermement les têtes de vissage 176 et de maintien 178 sur les vis 156a et écrou 158b.

Un vérin hydraulique à cliquets 180 est prévu sur chaque tige de vissage pour entraîner en rotation la tête de vissage lorsque celle-ci est appliquée sur la vis 156 correspondante, pour effectuer le vissage.

Le vérin 180 et les vérins 168 sont également pilotés par l'unité centrale de commande pour être successivement actionnés lorsque les têtes de préhension sont en position fermée sur le câble.

Pendant le vissage de la vis 156a, l'écrou 158a est maintenu par une tige de maintien non représentée, similaire à la tige de maintien 152. De même, la tige de maintien 152, maintient l'écrou 158b tandis qu'une tige de vissage entraîne la vis 156b.

La figure 6 montre aussi le fonctionnement d'un système de préhension de demi-balises.

Chaque tête de préhension comporte deux systèmes de préhension de demi-balises coopérant respectivement avec les brides 148a comportant un passage de câble 134a.

Chaque système de préhension comporte un premier mors fixe 182 solidaire du cadre 174 et un deuxième mors mobile 184. Un vérin 186 piloté par l'unité centrale de commande est prévu pour déplacer le mors 184 entre une position de préhension dans laquelle il est appliqué contre la bride 148a et une position de relâchement, non représentée, dans laquelle la demi-balise est libérée.

Un ressort hélicoïdal 188 permet de maintenir le mors 184 dans la position de préhension en cas de défaillance du vérin 186.

Enfin, une butée 190, solidaire du cadre 174 est prévue pour faciliter le positionnement de la bride 148a, comportant le passage de câble 134a entre les mors 182, 184 de chaque système de préhension.

## Revendications

1. Dispositif de pose automatique de balises aériennes sur un câble, comprenant au moins une paire de magasins (12a, 12b) de distribution de demi-balises (14, 14a, 14b), des moyens (16) de mise en place et d'assemblage sur le câble de demi-balises distribuées respectivement par les magasins de distribution, pour former des balises, caractérisé en ce que le dispositif comporte des moyens d'accrochage et de déplacement (20, 22, 32, 34) pour être suspendu au câble (18) et pour se déplacer le long du câble selon un sens de déplacement (X), les moyens (16) de mise en place et d'assemblage des demi-balises (14a, 14b) étant disposés sur le dispositif de façon à poser les balises (14a, 14b) derrière les moyens d'accrochage et de déplacement (20, 22, 32, 34) du dispositif sur le câble, par rapport au sens de déplacement (X).

2. Dispositif selon la revendication 1, caractérisé en ce que les moyens (16) de mise en place et d'assemblage des demi-balises (14a, 14b) comportent un guide de positionnement des demi-balises par rapport au câble avant leur assemblage.

3. Dispositif selon la revendication 2, caractérisé en ce que les moyens (16) de mise en place et d'assemblage des demi-balises comportent :
- au moins un mécanisme de pose (50) comprenant le guide de positionnement et une paire de têtes de préhension (52a, 52b) de demi-balises (14a, 14b) distribuées par les magasins de distribution (12a, 12b),
- au moins un mécanisme de déplacement (54, 54a, 54b, 66) pour déplacer le mécanisme de pose (50) entre les magasins (12a, 12b) et le câble (18), le mécanisme de pose (50) étant monté pivotant sur le mécanisme de déplacement pour orienter le guide de positionnement vers le câble, et le mécanisme de pose (50) comportant en outre des moyens (70) d'articulation mutuelle des têtes de préhension (52a, 52b) pour les faire pivoter d'une position, dite ouverte, de préhension des demi-balises vers une position, dite fermée, d'assemblage des demi-balises (14a, 14b) sur le câble, dans laquelle des côtés d'assemblage respectivement de chaque demi-balise sont mutuellement en contact.

4. Dispositif selon la revendication 3, caractérisé en ce qu'au moins l'une des têtes de préhension (52a, 52b) comportent des moyens (140a, 140b, 142a, 142b, 144a, 144b, 146a, 146b) de manoeuvre d'organes de fixation portés par les demi-balises.

5. Dispositif selon la revendication 4, caractérisé en ce que les organes de fixation sont des ensembles vis-écrou (156, 156a, 156b, 158, 158a, 158b).

6. Dispositif selon l'une quelconque des revendications 3 à 5, caractérisé en ce que le guide de positionnement comporte une paire de fourches (56a, 56b) dans un plan (138) sensiblement perpendiculaire à un axe (62) de rotation du mécanisme de pose (50) par rapport au mécanisme de déplacement et contenant un axe (72) défini par les moyens d'articulation.

7. Dispositif selon la revendication 6, caractérisé en ce que les fourches (56a, 56b) sont disposées respectivement de part et d'autre des têtes de préhension.

8. Dispositif selon l'une quelconque des revendications 3 à 7, caractérisé en ce que les têtes de préhension (52a, 52b) comportent chacune au moins un système de préhension (182, 184, 186) coopérant avec une bride (148a, 148b) des demi-balises.

9. Dispositif selon la revendication 3, caractérisé en ce qu'il comprend un châssis (10) incluant les moyens d'accrochage et de déplacement (20, 22, 32, 34), ces derniers présentant au moins deux crochets (20, 22) de suspension du dispositif fixés respectivement à l'avant et à l'arrière du châssis (10), les crochets de suspension définissant un axe de déplacement (38) et les magasins de distribution (12a, 12b) étant disposés côte à côte dans le châssis (10) sensiblement parallèlement à cet axe (38), les magasins présentant chacun une ouverture (42) de distribution de demi-balises, orientée vers l'arrière du dispositif, par rapport au sens de déplacement (X).

10. Dispositif selon la revendication 9, caractérisé en ce que le mécanisme de déplacement (54, 54a, 54b, 66) comporte au moins un bras pivotant (54) présentant une première extrémité avec une première articulation (58) reliée au châssis (10), la première articulation (58) ayant un axe (68) de pivotement sensiblement perpendiculaire à un plan (67) médian des magasins de distribution de demi-balises, et contenant ledit axe de déplacement (38), le mécanisme de déplacement comportant en outre un vérin (66) monté entre le châssis (10) et le bras pivotant (54) pour faire pivoter le bras autour du premier axe (68) entre une position basse dans laquelle le mécanisme de pose (50) est positionné derrière les ouvertures de distribution des magasins et une position haute dans laquelle le mécanisme de pose (50) est positionné derrière les crochets de suspension (20, 22).

11. Dispositif selon la revendication 10, caractérisé en ce que le bras pivotant (54) présente une deuxième extrémité (60) avec une deuxième articulation (64) selon un axe de pivotement (62) sensiblement parallèle à l'axe de pivotement (68) de la première articulation, la deuxième articulation (64) portant le mécanisme de pose (50), le dispositif comportant des moyens d'actionnement (65) pour faire pivoter le mécanisme de pose autour de l'axe de pivotement (62) de la deuxième articulation entre une première position dans laquelle les têtes de préhension (52a, 52b) sont en position ouverte et tournées en regard des ouvertures de distribution (42) des magasins (12a, 12b), lorsque le bras de déplacement (54) est en position basse, et une deuxième position dans laquelle les têtes de préhension sont tournées en regard du câble (18), lorsque le bras de déplacement est en position haute.

12. Dispositif selon la revendication 4, caractérisé en ce qu'il comporte une unité centrale de commande pour commander à partir d'une position de repos des moyens (16) de mise en place des demi-balises, dans laquelle le bras pivotant (54a, 54b) est dans la position basse et le mécanisme de pose (50) dans la première position, successivement :
- l'actionnement d'un système de préhension (182, 184, 186) de chaque tête de préhension (52a, 52b) pour saisir une demi-balise (14a, 14b) dans chaque magasin (12a, 12b),
- l'actionnement du vérin (66a, 66b) du bras pivotant (54a, 54b) et des moyens d'actionnement (65) pour faire pivoter le bras (54a, 54b) vers la position haute et faire pivoter le mécanisme de pose (50) vers la deuxième position,
- l'actionnement du mécanisme de pose (50) pour faire pivoter les têtes de préhension (52a, 52b) de la position ouverte vers la position fermée,
- l'actionnement des moyens de manoeuvre (140a, 140b, 142a, 142b, 144a, 144b, 146a, 146b) d'organes de fixation (156, 156a, 156b, 158, 158a, 158b) des balises (14a, 14b),
- l'actionnement du système de préhension (182, 184, 186) de chaque tête de préhension (52a, 52b) pour libérer les demi-balises (14a, 14b),
- l'actionnement du mécanisme de pose pour faire pivoter les têtes de préhension de la position fermée vers la position ouverte,
- l'actionnement du vérin du bras pivotant et des moyens d'actionnement (65) pour respectivement faire pivoter le bras vers la position basse et faire pivoter le mécanisme de pose vers la première position.

13. Dispositif selon l'une quelconque des revendications précédentes, caractérisé en ce que les moyens d'accrochage et de déplacement comportent en outre des moyens moteurs de déplacement à galets (32, 34) pour le déplacement autonome du dispositif le long du câble (18).

14. Procédé de pose de balises aériennes sur un câble avec un dispositif conforme à la revendication 6, caractérisé en ce qu'il comporte les étapes suivantes :
- préhension par les têtes de préhension (52a, 52b) de deux demi-balises (14a, 14b) délivrées par les magasins de distribution (12a, 12b),
- actionnement du mécanisme de déplacement (54a, 54b, 66) pour déplacer le mécanisme de pose (50) des magasins vers le câble,
- actionnement du mécanisme de pose (50) pour orienter le guide de positionnement (56a, 56b) vers le câble,
- actionnement du mécanisme de pose pour faire pivoter les têtes de préhension (52a, 52b) vers la position fermée lorsque le guide de positionnement est en contact avec le câble,
- actionnement de moyens de manoeuvre d'organes de fixation pour rendre mutuellement solidaires les demi-balises (14a, 14b) et pour les fixer sur le câble.

15. Procédé selon la revendication 14, caractérisé en ce que l'actionnement du mécanisme de déplacement (54, 54a, 54b, 66) et l'actionnement du mécanisme de pose pour orienter le guide de positionnement sont en partie concomitants.

16. Procédé selon l'une des revendications 12 ou 14, caractérisé en ce que l'actionnement du mécanisme de pose (50) pour l'orientation du guide est interrompu et le mécanisme de pose pivote librement lorsqu'au moins l'une des fourches (56a, 56b) du guide positionnement est en appui contre le câble (18) et en ce que l'actionnement du mécanisme de pivotement est interrompu lorsque les deux fourches (56a, 56b) du guide sont en appui contre le câble (18).
